# EUROPEAN PATENT APPLICATION

(11) **EP 3 176 711 A1**
(43) Date of publication of application: **07.06.2017**
(21) Application number: 15826802.9
(22) Date of filing: 28.07.2015
(51) Int. Cl.: G06F 17/50

(54) **PLANT DESIGN ASSIST DEVICE AND PLANT DESIGN ASSIST PROGRAM**

(30) Priority: 29.07.2014 JP 2014154038
(71) Applicant: Chiyoda Corporation, Kanagawa 220-8765 (JP)
(72) Inventor: TAKAMURA, Masaki, Yokohama-shi Kanagawa 220-8765 (JP); URUSHIBARA, Ken, Yokohama-shi Kanagawa 220-8765 (JP)
(74) Representative: Schröer, Gernot H.
(86) International application number: PCT/JP2015/071357
(87) International publication number: WO 2016/017630

(57) **Abstract**

A plant design device displays a piping diagram of a plurality of control units on a screen according to piping information, wherein the control units have set therein boundary conditions indicating allowable ranges of loads applied to the control units respectively. A control unit that has a boundary condition designated by a user is displayed in the piping diagram on the screen in a visually identifiable manner from the other control units. A control unit with no boundary condition set may be displayed in the piping diagram on the screen in a visually identifiable manner from the other control units. In addition, referring to predicted loads of the control units computed by a simulator, a control unit, the predicted load of which does not satisfy the boundary condition, may be displayed in the piping diagram on the screen in a visually identifiable manner from the other control units.

## Description

### [Technical Field]

The present invention relates to a technique for assisting in designing a large-scale plant, and in particular, to a technique for preventing a mistake from occurring in a design stage.

### [Background Art]

When a large-scale plant such as a nuclear plant and an LNG plant is designed, first of all, from among various kinds of members (hereinafter referred to as "control units") such as a pump, a valve, a distillation column, a reaction column, a heat exchanger and a pipe, main control units are selected, and the layout and piping of the main control units are determined. In this case, a process flowchart, which is called PFD (Process Flow Diagram), is created, and the energy balance and material balance of a main control system are calculated by a process simulator.

After the process calculation is corrected while repeating the simulation, the piping size is reflected in Piping & Instrument Diagram (P&ID) that is a more detailed piping and instrument diagram. The P&ID is important design information shared by a plurality of designers, and a three-dimensional plant model is designed based on the P&ID.

### [Related Art Documents]

[Patent Document 1] JP 2010-282496

### [Disclosure of the Invention]

### [Problems to be solved by the Invention]

It is not unusual for a large-scale plant, in particular, to have control units, the total number of which exceeds 10000. A plurality of designers are involved in such an enormous amount of design information, and therefore it is necessary to pay careful attention to the input, transmission and management of the design information. In particular, when design information from a plurality of process designers is collected into a P&ID, careful check work is required.

The present invention has been made taking the above-described problems into consideration, and a main object of the present invention is to provide a technique for preventing a design error from occurring in a plant design.

### [Means for Solving the Problem]

A plant design device according to one mode of the present invention includes: a piping information holder that holds piping information of a plurality of control units that configure a plant; a display unit that displays a piping diagram of the plurality of control units on a screen according to the piping information; and a boundary condition holder that holds boundary conditions indicating allowable ranges of loads applied to the control units respectively.

The display unit displays a control unit having a boundary condition designated by a user in the piping diagram on the screen in a visually identifiable manner from the other control units.

### [Effects of the Invention]

According to the present invention, when a plant design is made, omission of design information, a transfer error and the like can be efficiently detected.

### [Brief Description of the Drawings]

FIG. 1 is a conceptual diagram illustrating a design process up to a stage of generating a P&ID from a PFD.
FIG. 2 is a functional block diagram of a plant design device;
FIG. 3 is a conceptual diagram of a PFD.
FIG. 4 is a data structure diagram of a simulation file.
FIG. 5 is a data structure diagram of a specification file.
FIG. 6 is a data structure diagram of a design information file.
FIG. 7 is a conceptual diagram of a P&ID.
FIG. 8 is a conceptual diagram illustrating a method for checking a design in a P&ID.
FIG. 9 is a data structure diagram of a specification file in which a difference in applying conditions is taken into consideration.

### [Modes for Carrying Out the Invention]

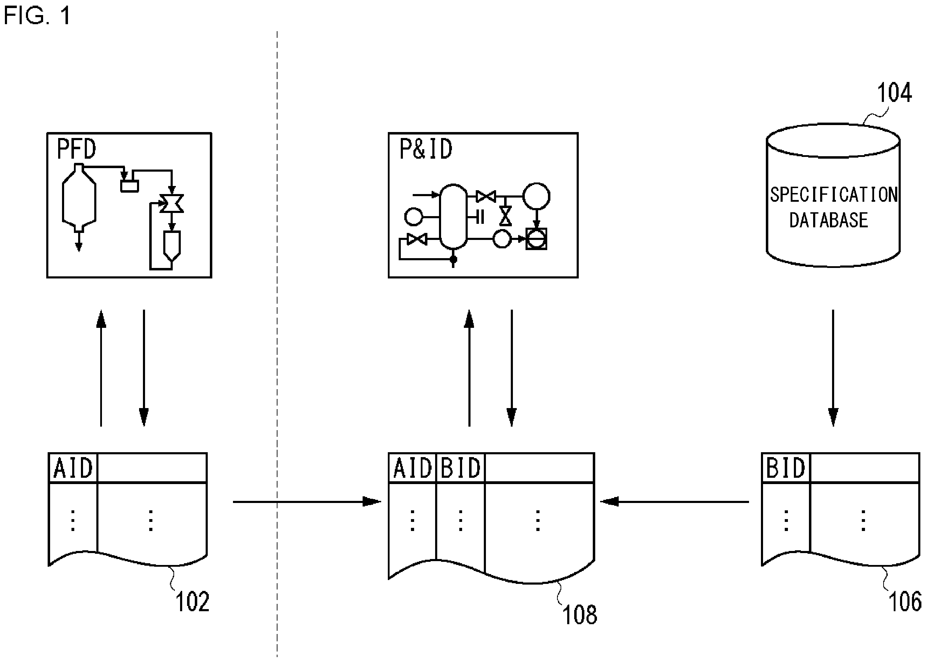

FIG. 1 is a conceptual diagram illustrating a design process up to a stage of generating a P&ID from a PFD.

In a plant design, an engineer taking charge of the upstream of the design (hereinafter referred to as a "process engineer") selects main control units, and determines operation conditions, device designs, and piping sizes for the main control units, and an engineer taking charge of the downstream of the design (hereinafter referred to as a "piping design engineer") three-dimensionally lays out all control units in detail based on design information provided by the process engineer.

In consideration of various design conditions such as customer requirements and technical problems, the process engineer selects main control units, creates a PFD (Process Flow Diagram), and determines operation conditions and piping sizes. Initial conditions are set in a process simulator, and the operation of a control system is simulated on the PFD. Temperature, pressure, flow rate conditions and the like related to the simulation are corrected as appropriate based on the result of the simulation. The design of the main control system is fixed by repeating the simulation and the correction. As the result of the simulation, a simulation file 102 is generated.

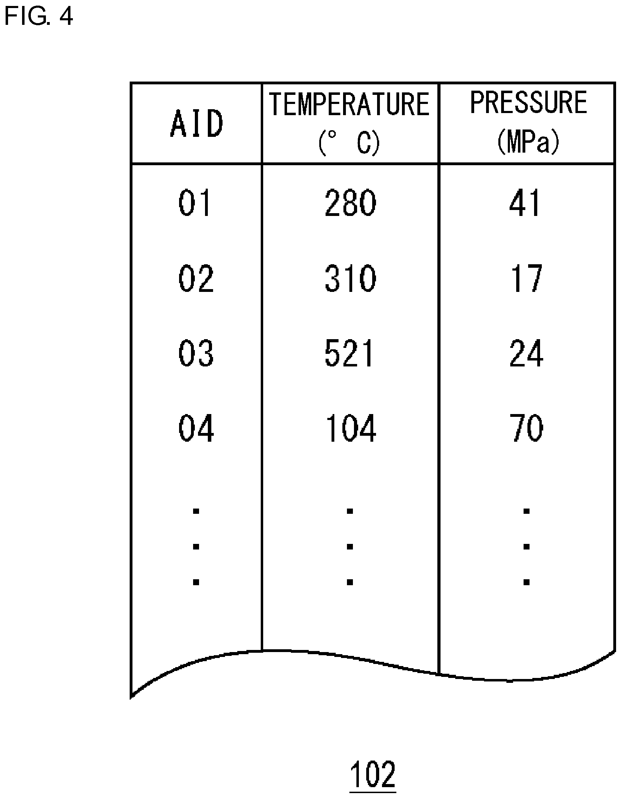

The simulation file 102 includes information about a predicted load (the temperature, the pressure, etc.) for each control unit included in the PFD. In the simulation file 102, a control unit is identified by a unique ID (hereinafter referred to as an "AID") that is specific to the process simulator. In general, the AID is called a stream number. The simulation file 102 will be described later in detail in conjunction with Fig. 4. The process engineer performs a basic design in such a manner that a predicted load of each control unit satisfies a required level, and then provides process condition information obtained by the PFD and the simulation file 102 to the downstream of the design as output.

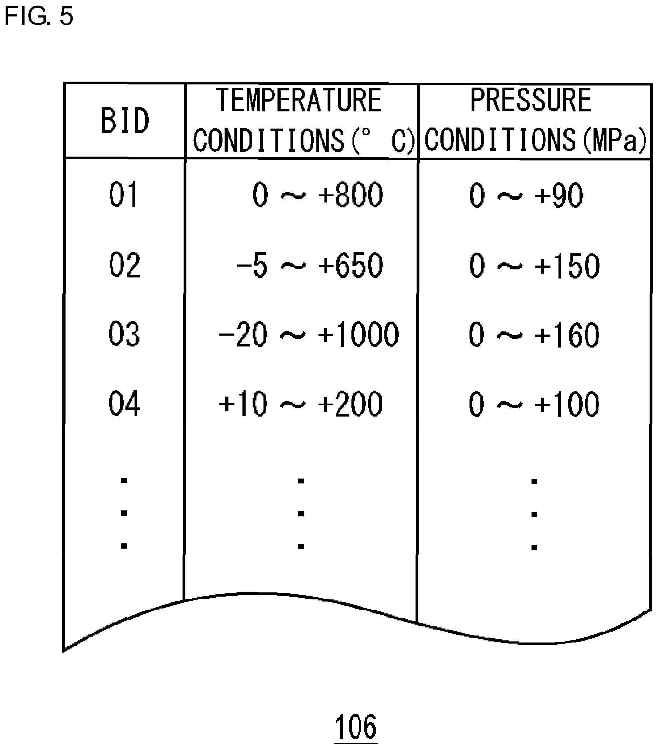

Various kinds of specification/standard information of control units are registered in a specification database 104. A specification file 106 is generated from the specification database 104. The specification file 106 is generated by extracting specifications of control units employed in a plant, and then by listing the specifications. The "specifications" described here includes not only the size and material quality of each control unit, but also boundary conditions. The "boundary conditions" are standards indicating a load range capable of ensuring the proper use of a control unit, such as an available temperature range and an available pressure range. In the specification file 106, a control unit is identified by a unique ID (hereinafter referred to as a "BID") that is specific to the specification database 104. The specification file 106 will be described in detail in conjunction with Fig. 5.

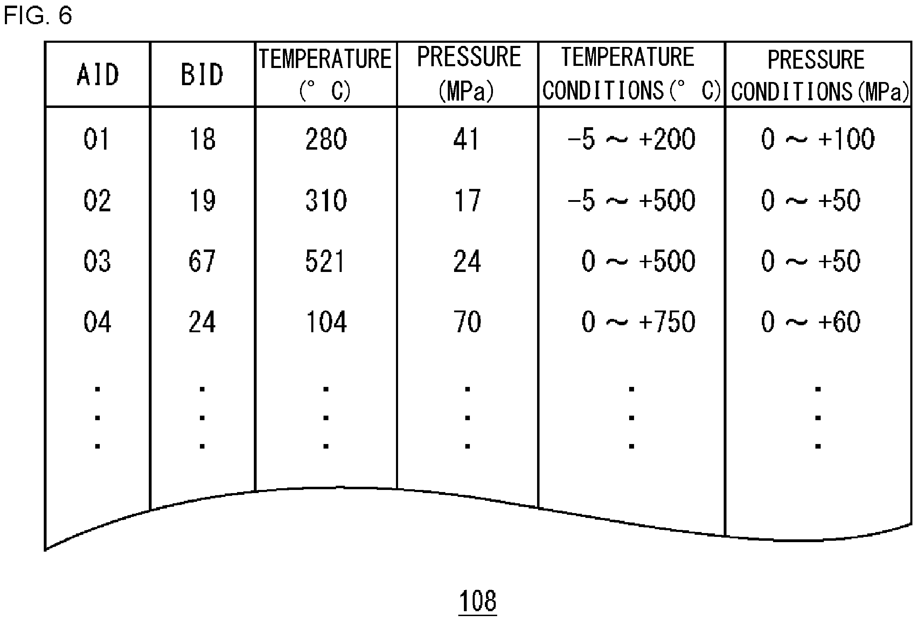

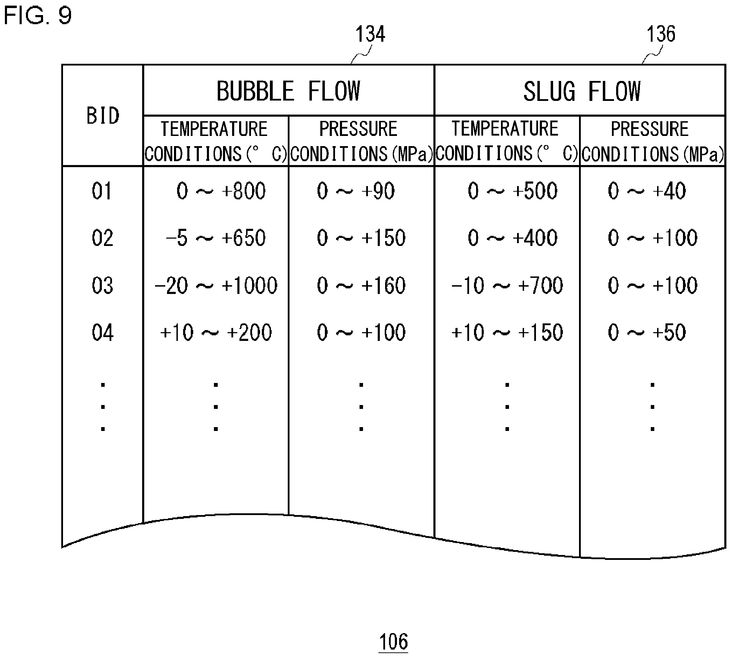

The simulation file 102 and the specification file 106 are brought together as a design information file 108. In general, the design information file 108 is generated by using a well-known file format such as Excel (registered trademark), and is then registered in a database. The transfer of data from the simulation file 102 and the specification file 106 to the design information file 108 is usually performed by manual operation through well-known database software. The design information file 108 is fetched into a plant design device 100, and a detailed design of the plant is performed based on the design information file 108 to create a P&ID. The design information file 108 will be described later in detail in conjunction with Figs. 6 and 9.

It is necessary to carefully transfer the data to the design information file 108. The AID specific to the process simulator and the BID specific to the specification database 104 are based on different ID systems respectively, and therefore careful attention should be paid to the correspondence relationship between the AID and the BID. In addition, attention should be paid so as not to make a mistake, for example, forgetting to transfer a part of the boundary conditions of the specification file 106. When an information transfer error occurs while the design information is transferred from the process engineer to the piping design engineer, the productivity of the process design largely decreases. A particularly important problem of a large-scale plant that includes control units, the number of which is 10000 or more, is related to reliable and quick transfer of design information.

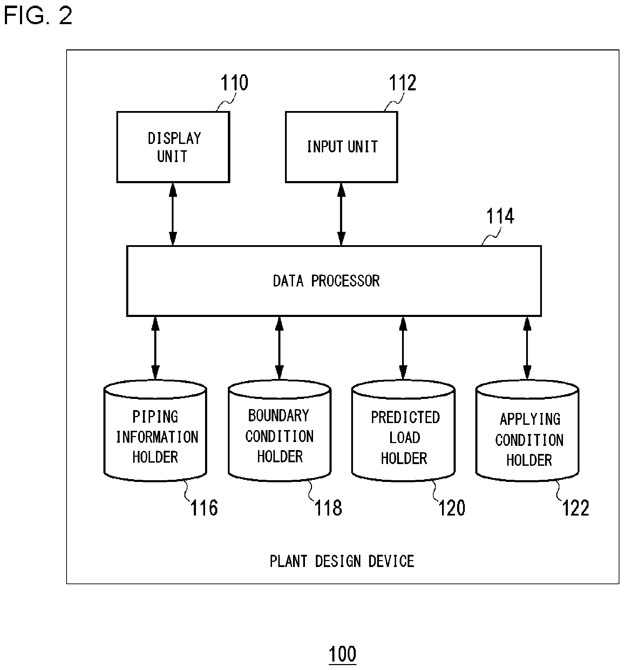

FIG. 2 is a functional block diagram of the plant design device 100.

Components of the plant design device 100 are implemented by an arbitrary combination of hardware and software, the combination mainly including a CPU of an arbitrary computer, a memory, a program that is loaded into the memory and that implements components shown in FIG. 2, a storage unit such as a hard disk for storing the program, and a network connection interface. In addition, it would be understood by a person skilled in the art that there are various modified examples of implementation methods and devices. Each diagram described hereinafter does not indicate a configuration on a hardware basis, but indicates blocks on a function basis.

The plant design device 100 is used by the piping design engineer, and an object of the plant design device 100 is to fetch the design information file 108 so as to verify the consistency of the P&ID. The plant design device 100 includes a display unit 110 that displays, for a designer, images of various kinds of information, an input unit 112 that accepts various kinds of inputs from the designer, a data processor 114, a piping information holder 116 that holds piping information, a boundary condition holder 118 that holds boundary conditions, a predicted load holder 120 that holds predicted load information, and a applying condition holder 122 that holds applying condition information. The data processor 114 executes various kinds of processing based on data held in the piping information holder 116, the boundary condition holder 118, the predicted load holder 120 and the applying condition holder 122, and data input from the input unit 112.

The piping information is information obtained by summarizing specifications of employed control units and the piping thereof. The piping information is originally based on information from the PFD. In addition, the creation and modification of the P&ID by the piping design engineer enables to change and enrich the piping information.

As described above, the boundary conditions indicate a margin for the safe use of the control units. The "predicted load" is a load (the temperature, the pressure, etc.) that is applied to each control unit, and that is predicted by the process simulator. The predicted load is provided by the simulation file 102. The "applying conditions" are information indicating a use situation of each control unit. The information is added by the process engineer and the piping design engineer. More specifically, the information includes information related to an environment (the outside air temperature, the humidity, etc.) in which each control unit is used, and information about materials and the like treated by each control unit. The details will be described later in conjunction with FIG. 9.

Information included in the boundary condition holder 118 and information included in the predicted load holder 120 correspond to information included in the specification file 106 and information included in the simulation file 102 respectively. However, the boundary condition holder 118 and the predicted load holder 120 are conceptual, and therefore these holders may be formed as a single unit.

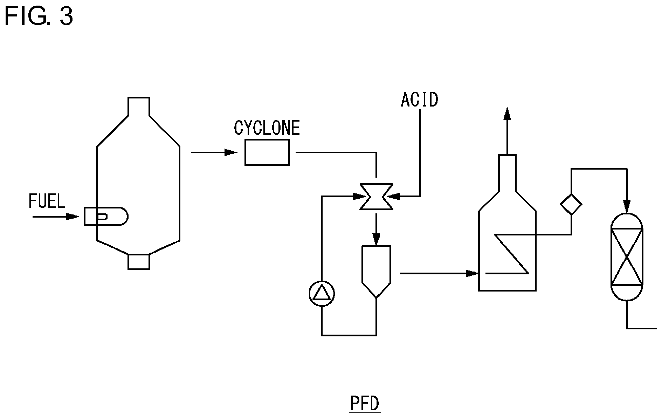

FIG. 3 is a conceptual diagram of a PFD.

The process engineer uses a well-known process simulator to select main control units, and then to make a layout and piping connections, thereby designing a main control system. After designing, initial operation conditions are set to perform simulation, and a check is made as to whether or not a desired function is achieved in the main control system. The design of the main control system is fixed by repeating the simulation and the design modification. The design of the PFD is what is called a conceptual design of the plant, and is work for determining a skeleton of the whole plant.

FIG. 4 is a data structure diagram of the simulation file 102.

As described above, the control unit is identified by the AID in the process simulator. When a simulation is executed, a predicted load that is a predicted value of a load applied to each control unit is calculated. FIG. 4 presents the temperature and the pressure as the predicted loads. However, the predicted loads are not limited to the temperature and the pressure, but may include other information such as flow velocity. In FIG. 4, as the result of simulation, it is predicted that a control unit identified by an AID:01 will have a temperature of 280 (°C) and a pressure of 41 (MPa).

FIG. 5 is a data structure diagram of the specification file 106.

The specification file 106 indicates boundary conditions of control units registered in the specification database 104. Here, a temperature condition and a pressure condition will be described as a target. As described above, in the specification database 104, each control unit is identified by the BID that is an ID used in a system different from the system in which the AID is used.

In FIG. 5, an allowable range of the temperature of a control unit identified by a BID:01 is 0 to 800 (°C). Thus, the control at the temperature that does not fall within this range is not preferable. Similarly, an allowable range of the pressure is 0 to 90 (MPa). In actuality, the temperature and the pressure are determined, for example, in such a manner that a value of the pressure is estimated based on a range of the temperature. Thus, boundary conditions are often set by determining the temperature and the pressure in a combined manner.

FIG. 6 is a data structure diagram of the design information file 108.

The design information file 108 is formed by combining the simulation file 102 and the specification file 106. A user transfers data of the simulation file 102 and data of the specification file 106 to the design information file 108. In the simulation file 102, each control unit is identified by the AID, whereas in the specification file 106, each control unit is identified by the AID. Therefore, it is necessary to carefully push forward transfer work while checking the correspondence relationship between the AID and the BID.

In the case of FIG. 6, AID:01 corresponds to BID:18. A boundary condition related to the temperature of the control unit corresponding to AID:03 (BID:67) ranges from 0 to 500(°C). However, the predicted load is 521(°C). Thus, the predicted load (the temperature) of this control unit does not satisfy the boundary condition, and therefore it is necessary to take some measures such as replacement of the control unit. Similarly, a boundary condition related to the pressure of the control unit corresponding to AID:04 (BID:24) ranges from 0 to 60 (MPa). However, the predicted load is 70 (MPa), and therefore does not satisfy the boundary condition either.

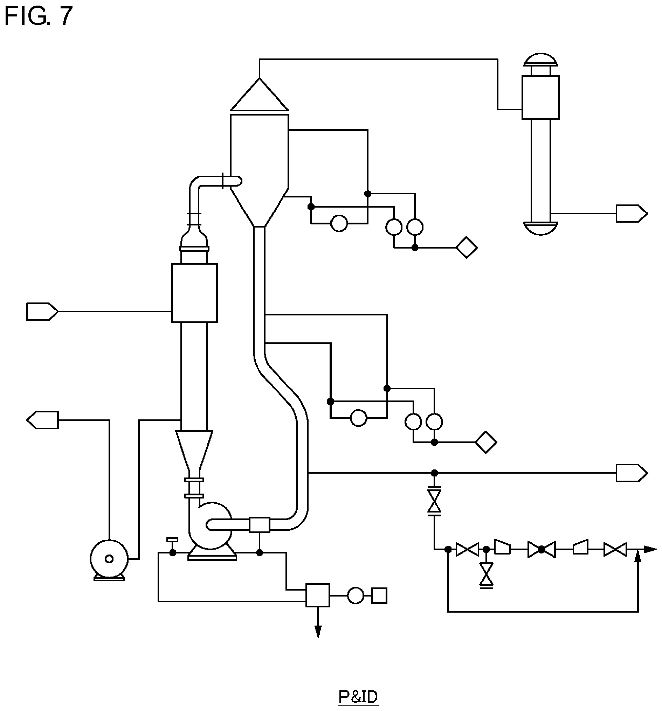

FIG. 7 is a conceptual diagram of a P&ID.

The plant design device 100 fetches the design information file 108. The piping design engineer uses the plant design device 100 to design a P&ID as a more specific piping and instrument diagram. Usually, a plant is divided into a plurality of regions, and a process engineer in charge performs a PFD design for each region. One P&ID is generated from a large number of PFDs obtained in this manner. The P&ID is important design information shared by all designers for the plant design. The P&ID includes not only the main control system designed with the PFD, but also designing of the whole control system.

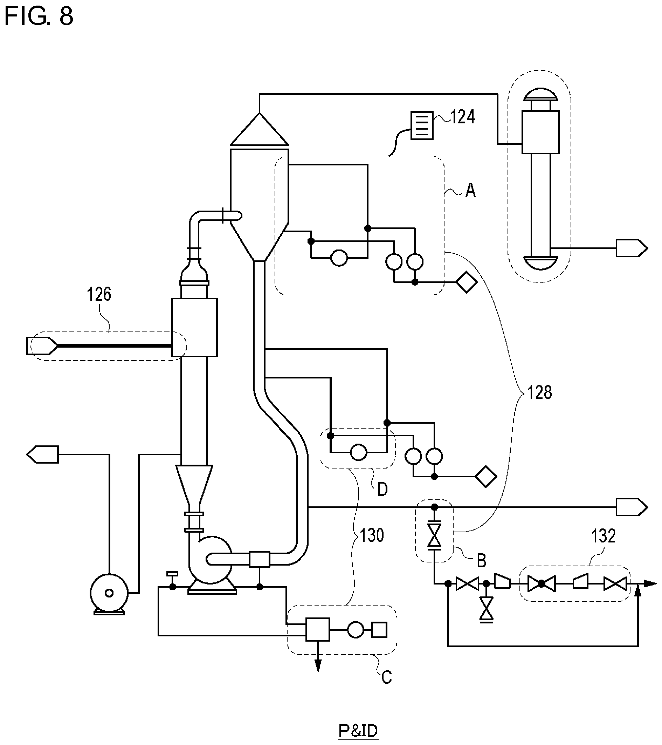

FIG. 8 is a conceptual diagram illustrating a method for checking a design in a P&ID.

As described above, the P&ID depends on the design information file 108, and thus is based on the major premise that settings of the design information file 108 are correct. However, when the total number of control units (members) becomes several thousand or more, work of checking appropriateness of the design information file 108 is a great burden.

By changing a method for displaying the P&ID according to input from a user (mainly the piping design engineer), the plant design device 100 according to the present embodiment reduces the workload of checking described above.

### (1) Checking of a control unit in which a boundary condition is not set

In principle, all control units are each provided with boundary conditions. However, in a process of generating the design information file 108 from the specification database 104, the possibility of forgetting settings of the boundary conditions, which makes a human error, cannot be denied. When the user designates "boundary condition unset", the data processor 114 refers to the boundary condition holder 118 (the design information file 108), identifies a control unit in which a boundary condition is not set, and then displays such a control unit in a predetermined color, for example, in red. In FIG. 8, a boundary-condition unset group 126 applies to such a control unit, and this group is displayed in red. By setting a method for displaying a control unit, the boundary condition of which is not set, so as to make the control unit visually identifiable, the user can see at a glance, whether or not there is such an insufficiently set control unit in the P&ID.

The boundary-condition unset may be a case where a part of a plurality of boundary conditions such as the temperature and the pressure is unset or a case where all of the plurality of boundary conditions are unset.

### (2) Checking of regions that share a boundary condition

Control units that share a boundary condition can also be collectively displayed in an identifiable manner. For example, with respect to the temperature, a user designates a pickup condition for a boundary condition as follows: "control units each having an allowable temperature of up to 800(°C)"; "control units each having an allowable temperature ranging from 50 to 500(°C)"; and "control units each having an allowable temperature of lower than 500(°C)". The data processor 114 refers to the boundary condition holder 118, identifies a control unit that meets the pickup condition, and then displays such a control unit in a predetermined color, for example, in blue. A boundary-condition sharing group 128 in FIG. 8 is a group of "control units, the allowable temperature of which ranges from 50 to 500(°C)". Displaying the boundary-condition sharing group 128 in a visually identifiable manner enables the user to visually grasp the rough outline of boundary conditions of individual parts of the plant. In FIG. 8, the boundary-condition sharing group 128 is divided into a group A and a group B. Consecutive control units each having an identical or similar boundary condition often function as the whole. Since the control unit in the group B is what is called a "detached territory", there is a possibility that settings of boundary conditions of the control unit in the group B will be incorrect, or the AID will be incorrectly associated with the BID. A control unit having an improperly set boundary condition can be visually detected with ease based on the general knowledge that control units having similar boundary conditions tend to gather in the same system. Attention can be more easily concentrated on a part that may include a mistake in comparison with checking the whole aimlessly.

With respect to the boundary-condition sharing group 128, a shared boundary condition may be additionally displayed as character information like a tag 124.

### (3) Checking of regions that share a predicted load

Control units that share a predicted load can also be collectively displayed in an identifiable manner. For example, with respect to the temperature, a user sets pickup conditions, for example, as follows: "control units each having a predicted load (the temperature) ranging from 100 to 200(°C)"; and "control units each having a predicted load (the temperature) lower than 50 (°C)". The data processor 114 refers to the predicted load holder 120, identifies a control unit that meets a pickup condition, and then displays such a control unit in a predetermined color, for example, in green. A predicted-load sharing group 130 in FIG. 8 is a group of "control units each having a predicted load (the temperature) ranging from 100 to 200(°C)". Visually and identifiably displaying the predicted-load sharing group 130 enables the user to visually grasp the rough outline of predicted loads of individual parts of the plant. In FIG. 8, the predicted-load sharing group 130 is divided into a group C and a group D. Consecutive control units often have identical or similar predicted loads. Since the control unit in the group D is what is called a "detached territory", there is a possibility that the AID will be incorrectly associated with the BID for the control unit in the group D. In this manner, control units, each of which is improperly set, can be visually detected with ease based on the general knowledge that control units having predicted loads close to each other belong to the same system.
With respect to the predicted-load sharing group 130 as well, predicted loads may be additionally displayed as character information like the tag 124.

### (4) Checking of a region in which a predicted load does not satisfy a boundary condition

The plant design device 100 examines and finds out a control unit, the predicted load of which does not satisfy a boundary condition, and then displays such a control unit in a prescribed color, for example, in orange. In the case of the design information file 108 shown in FIG. 6, the control unit corresponding to AID:03 does not satisfy a boundary condition for the temperature, and therefore such a control unit is displayed in orange. A predicted-load deviating group 132 shown in FIG. 8 is a group of control units, the predicted loads of which do not satisfy boundary conditions respectively. Displaying the predicted-load deviating group 132 in a visually identifiable manner enables to visually grasp design problems.

FIG. 9 is a data structure diagram of the specification file 106 in which a difference in applying conditions is taken into consideration.

Among control units such as a pipe and a pump, there is also a control unit, the boundary condition of which changes depending on geographical conditions in which the control unit is used or depending on applying conditions such as a fluid to be treated. For example, there is a possibility that a natural gas plant in Middle East may differ in boundary conditions from a natural gas plant in Russia, and various kinds of fluid such as petroleum, a natural gas and water are assumed as kinds of fluid treated by a plant. In addition, boundary conditions also differ depending on whether an object to be treated is a gas, a liquid or a mixture of the gas and the liquid. Moreover, a gas-liquid two-phase flow means a state in which two kinds of different fluids, that is to say, a gas and a liquid, are mixed and move in the same flow path pipe. The characteristics of a gas-phase two-phase flow also change depending on a mixture ratio between a gas and a liquid. There are various modes of the gas-liquid two-phase flow, for example, a bubble flow (Bubble Flow) having small air bubbles dispersed in consecutive liquid phases, and a slug flow (Slug Flow) in which large air bubbles (gas slug) with which a cross section of a flow path is filled, and a liquid part (liquid slug) including small air bubbles, alternately exist. When the amount of the gas phase is small, the gas-liquid two-phase flow is a bubble flow, whereas when the amount of the gas phase is large, the gas-liquid two-phase flow becomes a slug flow. A flow pattern of the two-phase flow is determined by use of a state diagram from the density, viscosity, flow velocity, gas-liquid capacity ratio and the like of a gas phase/a liquid phase.

The specification file 106 shown in FIG. 9 defines boundary conditions for each of two applying conditions, that is to say, in a case where a fluid is transmitted as a bubble flow, and in a case where a fluid is transmitted as a slug flow. The applying condition holder 122 holds applying conditions assumed for each control unit. For example, when a fluid treated by the control unit corresponding to BID:01 is a bubble flow, a first boundary condition 134 that is a boundary condition of the bubble flow is applied, and when the fluid treated by the control unit corresponding to BID:01 is a slug flow, a second boundary condition 136 that corresponds to the slug flow is applied.

By selecting boundary conditions according to actual applying conditions, a design can be more properly checked in the P&ID. For example, in a part in which only a low-temperature fluid circulates, even a control unit having low heat resistance does not cause a problem. Meanwhile, in a part in which a fluid, the corrosiveness of which increases at the specific temperature or higher, circulates, the heat resistance may be insufficient as a boundary condition even at the temperature defined in specification/standard information or lower. Setting a coloring group in the P&ID based on boundary conditions corresponding to the applying conditions enables to easily understand the intention of the design in which the applying conditions are taken into consideration. In addition, in the case of checking whether or not a predicted load satisfies a boundary condition as well, a determination is made based on boundary conditions corresponding to the applying conditions.

Moreover, a group in which an applying condition is shared may be displayed in a predetermined color, for example, in purple according to the designation by the user. For example, only a control unit that treats a bubble flow may be identified as a purple group.

As described above, various kinds of design information included in the large-scale plant are summarized in the P&ID. However, by generating a group based on applying conditions, boundary conditions, predicted loads or a combination thereof, and by identifying the group by a unique color, the design outline and the design intention can be presented using visual information that indicates in "color". Design information can also be provided by using character information such as the tag 124, which is actually effective. However, humans are inherently accustomed to handling image information rather than character information. Using not only character information but also visual information enables diversified checking.

As described above, the present invention has been described according to the exemplary embodiments. It would be understood by a person skilled in the art that the exemplary embodiments are presented for illustrative purposes, various modified examples are possible as a combination of each component and each processing process, and such modified examples also fall within the scope of the present invention.

In the present embodiment, a predetermined group such as the boundary-condition sharing group 128 is identified by color. However, a group may be visually identified by changing a color parameter such as lightness and color saturation, or as a method other than color, by blinking or enlarging/reducing a relevant part. Alternatively, there can be considered a method in which the relevant part is surrounded by a frame, or a line type of the relevant part is changed.

As an identifiable expression method, not only color but also a line type of a line for drawing a control unit may be changed. The relevant part may be identified by, for example, three kinds of line types, that is to say, a thick line, a medium thick line and a thin line. In addition, a design of the line may be changed to, for example, a broken line, a solid line, or an alternate long and short dash line. When a user designates two boundary conditions, control units may be drawn so as to be identifiable from each other by drawing a control unit corresponding to a first boundary condition (for example, the temperature ranging from 0 to 300°C) with a red thin line, and by drawing a control unit corresponding to a second boundary condition (for example, the temperature ranging from 30 to 100°C) with a red thick line. According to such an identification method in which a color and a line type are combined, while defining the temperature ranging "from 0 to 300°C" as the first boundary condition, defining a narrower temperature range "from 10 to 100°C" as the second boundary condition, which is included in the temperature ranging "from 0 to 300°C", makes it possible to easily identify a second control unit that also satisfies the second boundary condition having in particular a tight temperature condition among control units that satisfy the first boundary condition. The first boundary condition and the second boundary condition may be in the inclusion relation with each other as described in the above example, or may be completely separated from each other.

Besides the above-described conditions, the following conditions are conceived of as identification conditions.

### (1) The timing of design change/design addition

A plant design is not performed from scratch every time, but may be performed based on a past plant design. A plant design may be customized by using, for example, a P&ID created in the past as a base, and by adding a new control unit to the base or replacing with a new control unit in the base. In this case, since the existing design has actual results, reviews have only to be carries out focusing on a newly designed part. Accordingly, the date and time of introducing a control unit may be included in the simulation file 102 and the design information file 108. The control unit may be identified according to the introduction date and time. For example, it is assumed that a P&ID designed before 2015 is used as a base, and a plurality of control units are newly added thereto in 2015 to create a new P&ID. In this case, if a user sets a condition of "introduction after 2015", such a newly replaced/added part can be identified.

More specifically, the date and time of introducing each control unit is recorded in the piping information holder 116 beforehand, the user inputs a condition related to the introduction date and time from the input unit 112, and the data processor 114 picks up a control unit that meets the introduction date and time condition. In addition, the display unit 110 may identifiably display the relevant control unit, for example, in pink.

Performing identification in such a manner enables to intensively review a newly designed part without aimlessly reviewing a past designed part having actual results and the newly designed part together, and consequently increases the efficiency of reviewing.

### (2) Person in charge of design

A plurality of persons in charge of design are involved in a plant design. In addition, a plurality of contractors are often involved in one plant. Accordingly, IDs for identifying a design supervisor and a contractor for each control unit may be added to the simulation file 102 and the design information file 108. In addition, an ID for identifying a design supervisor and/or a contractor for each control unit may be included in the piping information holder 116. When a user inputs a condition related to a design supervisor, for example, an ID of the design supervisor, from the input unit 112, the data processor 114 picks up a control unit provided with the ID. The same applies to an ID of a contractor. The plant design device 100 may identifiably display the relevant control unit, for example, in light blue (light blue).

Performing identification in such a manner facilitates visual checking of a part that is taken charge of by each design supervisor or each contractor in a complicated P&ID.

### (3) Flow velocity condition

Besides the temperature and the pressure, a predicted value and a boundary condition for flow velocity may be set. Furthermore, boundary conditions, and predicted values for various kinds of parameters related to fluid mechanics such as a viscosity coefficient and a Reynolds number may be set.

### (4) Module

A plant is constructed by combining a plurality of control units. However, there is also a case where a plant is constructed not by conveying control units to a site, but by shipping a module to the site. The module is a complex of control units each corresponding to a certain specific function. One module includes various kinds of control units such as various kinds of towers, pumps and heat exchangers. The piping information holder 116 may include an ID of a module to which each control unit belongs. When the user inputs a module ID from the input unit 112, the data processor 114 picks up a control unit associated with the ID. The plant design device 100 may identifiably display the relevant control unit, for example, in yellow green.

A plant design is reviewed by an expert engineer (hereinafter referred to as a "lead engineer"). Even in the case of a small design change, a review should always be carried out. A lead engineer having experiences enough to carry out reviews is valuable, and therefore a review load placed on the lead engineer tends to become very large. In general, a design change often occurs even after an overall design has been completed, and thus a review is required every time. When the time spent for reviewing by the lead engineer increases, the lead engineer cannot spare man-hours for the other work.

According to the plant design device 100 disclosed in the present embodiment, only a design change part can be identifiably displayed, thereby enabling to largely reduce a review load placed on the lead engineer. In addition, a part in which a predicted load does not match a boundary condition can also be checked, and therefore a designer himself/herself easily notices a design mistake before being reviewed by the lead engineer. According to the present system, man-hours required for the plant design is largely reduced. The present system is so effective that the total design time is reduced to half, and in particular, the reduction in review load placed on the lead engineer contributes to the reduction in design time. The reduction in review load enables a more effective review, and also contributes to an increase in quality.

### [Explanation of Reference Numerals]

- 100: Plant design device
- 102: Simulation file
- 104: Specification database
- 106: Specification file
- 108: Design information file
- 110: Display unit
- 112: Input unit
- 114: Data processor
- 116: Piping information holder
- 118: Boundary condition holder
- 120: Predicted load holder
- 122: Applying condition holder
- 126: Boundary-condition unset group
- 128: Boundary-condition sharing group
- 130: Predicted-load sharing group
- 132: Predicted-load deviating group

### [Industrial Applicability]

The present invention can be applied to a technique for assisting in designing a large-scale plant.

## Claims

1. A plant design device comprising:
a piping information holder that holds piping information of a plurality of control units that configure a plant;
a display unit that displays a piping diagram of the plurality of control units on a screen according to the piping information; and
a boundary condition holder that holds boundary conditions indicating allowable ranges of loads applied to the control units respectively,
wherein the display unit displays a control unit having a boundary condition designated by a user in the piping diagram on the screen in a visually identifiable manner from the other control units.

2. The plant design device according to claim 1, wherein the display unit draws, in the piping diagram, the control unit having the boundary condition designated by the user and the other control units in colors that differ from each other.

3. The plant design device according to claim 2, wherein the display unit further draws, in the piping diagram, control units having first and second boundary conditions designated by the user in the same color and with line types that differ from each other.

4. The plant design device according to claim 1, wherein the display unit further displays a control unit in which a boundary condition is not set in the piping diagram on the screen in a visually identifiable manner from the other control units.

5. The plant design device according to claim 1, further comprising a predicted load holder that holds a predicted load of a control unit, the predicted load being calculated by a simulator, wherein
the display unit displays a control unit, the predicted load of which does not satisfy a boundary condition, in the piping diagram on the screen in a visually identifiable manner from the other control units.

6. The plant design device according to claim 1, further comprising a predicted load holder that holds a predicted load of a control unit, the predicted load being calculated by a simulator, wherein the display unit displays a control unit, the predicted load of which falls within a range designated by the user, in the piping diagram on the screen in a visually identifiable manner from the other control units.

7. The plant design device according to claim 1, further comprising an applying condition holder that holds an applying condition of a control unit, wherein
the boundary condition holder holds boundary conditions for the plurality of applying conditions respectively, and based on a boundary condition corresponding to the applying condition of the control unit,
the display unit displays a control unit having the boundary condition designated by the user in the piping diagram on the screen in a visually identifiable manner from the other control units.

8. The plant design device according to claim 5, further comprising an applying condition holder that holds an applying condition of a control unit, wherein
the boundary condition holder holds boundary conditions for the plurality of applying conditions respectively, and based on a boundary condition corresponding to the applying condition of the control unit,
the display unit displays a control unit, the predicted load of which does not satisfy the boundary condition, in the piping diagram on the screen in a visually identifiable manner from the other control units.

9. The plant design device according to claim 7 or 8, wherein the applying condition indicates a kind of a fluid treated by a control unit or characteristics of the fluid.

10. The plant design device according to claim 1, wherein the piping information holder further holds information indicating an introduction timing of introducing a control unit, and
the display unit displays a control unit, the introduction timing of which falls within a range designated by the user, in the piping diagram on the screen in a visually identifiable manner from the other control units.

11. A plant design assist program that causes a computer to execute the functions of:
holding piping information of a plurality of control units that configure a plant;
holding boundary conditions indicating allowable ranges of loads applied to the control units respectively; and
displaying a piping diagram of the plurality of control units on a screen according to the piping information, and displaying a control unit having a boundary condition designated by a user in the piping diagram on the screen in a visually identifiable manner from the other control units.
